# EUROPÄISCHE PATENTSCHRIFT

(11) **EP 2 509 900 B1**
(45) Veröffentlichungstag und Bekanntmachung des Hinweises auf die Patenterteilung: **18.10.2017**
(21) Anmeldenummer: 10784767.5
(22) Anmeldetag: 24.11.2010
(51) Int. Cl.: B65H 19/10

(54) **VERWENDUNG EINES SPLICEBANDES MIT NEBENEINANDER ANGEORDNETEN KASCHIERMASSESTREIFEN**
USE OF A SPLICE BAND HAVING LAMINATING MASS STRIPS DISPOSED ADJACENT TO EACH OTHER
UTILISATION D'UNE BANDE D'ÉPISSAGE AVEC DES BANDES DE MASSE DE DOUBLAGE DISPOSÉES LES UNES À CÔTÉ DES AUTRES

(30) Priorität: 08.12.2009 DE 102009047680
(43) Veröffentlichungstag der Anmeldung: 17.10.2012
(73) Patentinhaber: tesa SE, 22848 Norderstedt (DE)
(72) Erfinder: NAGEL, Christoph, 22417 Hamburg (DE); CZERWONATIS, Dr. Niels, 22393 Hamburg (DE); WULF, Dr. Stefan, 22869 Schenefeld (DE); NOOTBAAR, Jens, 22527 Hamburg (DE)
(86) Internationale Anmeldenummer: PCT/EP2010/068103
(87) Internationale Veröffentlichungsnummer: WO 2011/069824

(56) Entgegenhaltungen:
- EP-A2- 1 076 026
- EP-A2- 1 630 116
- EP-B1- 1 318 962
- DE-A1- 4 033 900
- DE-A1- 19 956 442

## Beschreibung

Die Erfindung betrifft die Verwendung eines Splicebandes zum Ausrüsten eines gewickelten Ballens für den fliegenden Rollenwechsel, ein Spliceverfahren sowie die in diesem Verfahren verwendeten Splicebänder.

Flache, bahnförmige Materialien, insbesondere Papier, werden zu Ballen gewickelt. Solche Ballen werden zum Beispiel papierverarbeitenden Maschinen oder Druck- bzw. Verpackungsmaschinen zugeführt. Beim Dauerbetrieb solcher Anlagen ist es notwendig, an das Ende eines ersten Ballens des flachen, bahnförmigen Materials im fliegenden Wechsel den Beginn eines neuen aufgewickelten Ballens anzusetzen und in geeigneter Weise zu verbinden, ohne beim Wechsel der Rollen die schnelllaufenden Maschinen anhalten zu müssen. Dieser Vorgang wird als Spleißen (engl. "splice") bezeichnet.

Hierfür werden in der Papierindustrie doppelseitig klebende Selbstklebebänder eingesetzt, die im Wesentlichen aus einer Trägerschicht und zwei Selbstklebemasseschichten bestehen, um eine Verbindung zwischen dem Ende der alten Materialbahn und dem Anfang der neuen Materialbahn herzustellen. Das Ende der alten Materialbahn wird dabei mit dem Anfang der neuen Materialbahn verklebt.

Ebenfalls bekannt sind Klebebänder mit einem spaltbaren System, umfassend ein sich bei Normalkraft Beanspruchung zwischen Ober- und Unterseite auftrennendes Material. DE 40 33 900 A1 beschreibt ein Klebeband für die Vorbereitung eines Rollenwechsels mit zwei Verbindungs-Klebestreifen, die zwischen zwei mit Klebemasse beschichteten Trägern angeordnet sind. Gemäß Beschreibung öffnet das System, indem die Verbindungs-Klebestreifen von einem der Trägermaterialien lösen. Dies hat zur Folge, dass die abgelöste Klebemasse mit ihrer klebenden Fläche offenliegt. EP 1 076 026 A2 beschreibt ein Spliceband mit Fixierhilfe, wobei die Fixierhilfe aus einem Trägermaterial besteht, das aus zwei zusammen kaschierten flächigen Materialien gebildet ist, wobei die Kaschierung eine Sollbruchstelle bildet, und wobei die Fixierhilfe auf ihrer Unterseite haftklebend ausgerüstet ist. EP 1 640 301 A1 beschreibt ebenfalls ein Klebeband zur Herstellung einer Verbindung beim fliegenden Rollenwechsel mit einem spaltbaren System, wobei das spaltbare System aus zwei voneinander trennbaren

Schichten besteht. Ein Klebeband zur Herstellung einer Splice-Verbindung wird ferner in EP 1 630 116 A2 beschrieben. Dieses Klebeband enthält ein Trägermaterial, das auf der Oberseite mit einer Selbstklebemasse beschichtet und auf der gegenüberliegenden Seite mit einem spaltbaren System ausgerüstet ist, wobei das spaltbare System entlang einer Trennebene zwischen zwei Schichten öffnet. Ein weiteres Spliceband wird in EP 1 318 962 B1 beschrieben, wobei dieses Band zwei über eine Klebstoffschicht trennbar miteinander verbundene Substrate enthält.

Die bisher beschriebenen Systeme sind in ihrer Anwendbarkeit teilweise sehr eingeschränkt. So kommt es z.B. im Falle von automatisierten Verfahren, bei denen die Splicebänder auf einen gewickelten Ballen appliziert werden, bei den bisher beschriebenen Splicebändern häufig zu Beschädigungen im Bereich der Sollbruchstelle. Des Weiteren besteht bei den zuvor genannten Systemen die Schwierigkeit, das Spaltsystem derart einzustellen, dass einerseits das Risiko des ungewollten Anspaltens in der Beschleunigungsphase vermieden wird, und andererseits ein anwendungsgerechtes Spalten des Splicebandes ohne Beschädigung der zu verbindenden Materialbahnen gewährleistet wird. Ein Lösungsansatz besteht darin, die Trennkräfte eines vollflächigen Spaltsystems gezielt einzustellen. Bei einem vollflächig ausgegestalteten Spaltsystem muss jedoch das Spaltsystem immer einen Kompromiss darstellen. Zur Überwindung der Spaltfestigkeit an der vorderen Kante wird nämlich eine erhöhte, maximale Kraft zum Anspalten des Systems benötigt (Anspaltkraft). Des Weiteren benötigt man eine Kraft auf niedrigerem Niveau zum Spalten über die gesamte Breite des Splicebandes (Weiterspaltkraft). Das Produkt der Kraft mal der Breite des Spaltsystems ist die Arbeit, die zum Spalten benötigt wird (Spaltarbeit). Bei einem vollflächigen System muss zum einen die Anspaltkraft so hoch eingestellt sein, dass das Produkt durch die bei der Beschleunigung wirkenden Fliehkräfte und aerodynamischen Kräfte nicht vorzeitig öffnet, zum anderen muss die Spaltarbeit so gering eingestellt sein, dass die benötigte Arbeit für das komplette Durchspalten des Spaltsystems nicht zu Abrissen führt. Gerade bei vollflächigen Spaltsystemen ist dieser Kompromiss schwer einstellbar. Diese Problematik kommt insbesondere bei dünnen und somit empfindlichen Systemen zum Tragen.

Die vorliegende Erfindung bietet eine Lösung für die genannten Probleme, indem ein neues Spliceband bereitgestellt wird, das nebeneinander angeordnete Kaschiermassestreifen aufweist.

So betrifft die vorliegende Erfindung die Verwendung eines Splicebandes zum Ausrüsten eines gewickelten Ballens für den fliegenden Rollenwechsel, wobei
(a) das Spliceband einen ersten und einen zweiten Träger umfasst sowie mindestens zwei dazwischen angeordnete Kaschiermassestreifen, die jeweils den ersten Träger mit dem zweiten Träger verbinden, wobei die Träger auf ihrer den Kaschiermassestreifen abgewandten Seite eine erste beziehungsweise zweite Haftklebemasseschicht aufweisen, wobei die Kaschiermassestreifen nebeneinander angeordnet sind und jeweils eine Sollbruchstelle bilden;
(b) das Spliceband derart auf dem Ballen verklebt wird, dass ein Teil der ersten Haftklebemasseschicht eine erste Verklebungsfläche mit dem Endbereich der obersten Lage des gewickelten Ballens bildet und die zweite Haftklebemasseschicht im Übergangsbereich von oberster zu zweitoberster Lage des Ballens eine zweite Verklebungsfläche mit dem Ballen bildet, die zum Teil unterhalb der ersten Verklebungsfläche liegt, wobei sich die erste Verklebungsfläche innerhalb der beiden Längskanten in Längsrichtung des Splicebandes erstreckt, und der Teil der ersten Haftklebemasseschicht, der keine Verklebungsfläche mit dem Endbereich der oberste Lage des gewickelten Ballens bildet, für die verklebende Ankopplung an eine schnell laufende Bahn eines anderen, abrollenden Ballens offenliegt.

Unter Übergangsbereich von oberster zu zweitoberster Lage des Ballens ist im Sinne der vorliegenden Erfindung der Bereich des Ballens gemeint, in dem die oberste Lage des gewickelten Ballens aufhört und die zweitoberste Lage dieses Balles beginnt. Somit umfasst dieser Bereich den Übergang von oberster zu zweitoberster Lage des Ballens. Erfindungsgemäß wird das Spliceband also derart verklebt, dass die zweite Haftklebemasseschicht den genannten Übergang bedeckt. Die zweite Haftklebemasseschicht bildet also mit dem Ballen eine zweite Verklebungsfläche, die den Übergang von oberster zu zweitoberster Lage des Ballens bedeckt. Unter Endbereich der obersten Lage des gewickelten Ballens wird im Sinne der vorliegenden Erfindung der Beginn, d.h. das offenliegende Ende des gewickelten Ballens verstanden.

Die Erfindung betrifft ferner die verwendeten Splicebänder, gewickelte Ballen, die die Splicebänder umfassen, d.h. mit ihnen ausgerüstet sind, sowie ein Spliceverfahren, umfassend die Verwendung der genannten Splicebänder, bei dem das Spliceband derart auf dem Ballen verklebt wird, dass ein Teil der ersten Haftklebemasseschicht eine erste Verklebungsfläche mit dem Endbereich der obersten Lage des gewickelten Ballens bildet und die zweite Haftklebemasseschicht im Übergangsbereich von oberster zu zweitoberster Lage des Ballens eine zweite Verklebungsfläche mit dem Ballen bildet, die zum Teil unterhalb der ersten Verklebungsfläche liegt, wobei sich die erste Verklebungsfläche innerhalb der beiden Längskanten in Längsrichtung des Splicebandes erstreckt, und der Teil der ersten Haftklebemasseschicht, der keine Verklebungsfläche mit dem Endbereich der oberste Lage des gewickelten Ballens bildet, für die verklebende Ankopplung an eine schnell laufende Bahn eines anderen, abrollenden Ballens offenliegt, wobei die so ausgerüstete Papierrolle auf die gleiche Drehgeschwindigkeit wie der abrollende Ballen beschleunigt und gegen die Bahn des abrollenden Ballens gedrückt wird, wobei der offenliegende Teil der ersten Haftklebemasseschicht mit der Bahn des abrollenden Ballens verklebt, während nahezu zugleich das Spliceband an der Sollbruchstelle spaltet und somit die neue Papierrolle freigibt.

Die erfindungsgemäß verwendeten Splicebänder weisen insofern wenigstens einen ersten und einen zweiten Träger auf, sowie mindestens zwei dazwischen angeordnete Kaschiermassestreifen, die den ersten Träger mit dem zweiten Träger verbinden, wobei die Träger auf ihrer den Kaschiermassestreifen abgewandten Seite jeweils eine Haftklebemasseschicht aufweisen, wobei die Kaschiermassestreifen nebeneinander angeordnet sind und jeweils eine Sollbruchstelle bilden. Hierzu werden die beiden Träger, z. B. in Form von zwei Bahnen, miteinander kaschiert. Unter Verwendung einer geeigneten Kaschiermasse können hierzu zunächst wenigstens zwei Kaschiermassestreifen auf einen der beiden Träger aufgebracht werden, bevor der andere Träger appliziert wird. Dieser Verbund wird anschließend auf den nun außenliegenden Seiten, das heißt oben und unten, jeweils mit einer Haftklebemasse beschichtet. In einer alternativen Ausführungsform kann die Beschichtung mit Haftklebemassen auch vor dem Aufbringen der Kaschiermasse erfolgen. In diesem Fall ist es jedoch erforderlich, die Klebmasse jeweils mit einem Liner abzudecken. Die Haftklebemasseschichten erstrecken sich bevorzugt vollflächig über das gesamte Trägermaterial. Ebenfalls denkbar ist eine im Wesentlichen vollflächige Beschichtung der Träger, worunter jeweils eine 80 - 95 %ige Bedeckung der Träger mit einer Haftklebemasseschicht zu verstehen ist. Ferner ist ein lediglich teilweiser Auftrag der Haftklebemassen auf die Träger denkbar. Hierbei muss jedoch eine gute Verklebung mit dem zu spleißenden Material während der Anwendung gewährleistet sein. Optional können nun eine bzw. beide Seiten des Verbundes, das heißt beide Haftklebemasseschichten mit einem Trennpapier (Liner) belegt werden.

Als Kaschiermasse kann z. B. eine solche verwendet werden, die neben einem Binder schwach trennwirksame silikonfreie und bei Bedarf auch elastifizierende Zusätze enthält. Dabei ist darauf zu achten, dass die getrockneten Filme auch bei höheren Temperaturen keine Haftkraft besitzen, damit die nach der Spaltung freigelegten Flächen keine Maschinenteile oder Produktionsware verschmutzen oder daran kleben bleiben. Für den Einsatz in Papiermaschinen ist es wünschenswert, dass alle Bestandteile des Spleißbandes das Repulpieren von Papieren nicht stören. Bei der Weiterverarbeitung herausgeschnittene Spleißzonen können dann problemlos repulpiert werden. Daher sind wasserbasierte Zusammensetzungen der Kaschiermasse, die bei der Papierherstellung übliche Hilfsstoffe enthalten, besonders vorteilhaft. Als Binder können z.B. modifizierte Stärken verwendet werden, oder Bindemittel wie sie für Nassklebebänder seit langem in Gebrauch sind. Als Trennmittel können z.B. Talkum, Stearylderivate wie Ca-Stearat oder Dispersionen von polymeren Trennmitteln, wie z.B. Dispersionen auf Basis von Copolymeren aus Stearylmethacrylat oder Stearylderivaten der Maleinsäure mit Styrol, eingesetzt werden. Als Elastifiziermittel können z.B. wasserlösliche Polyglykole dienen. Insbesondere wässrige Zubereitungen mit 10 - 90 Gew.% Bindemittel und 10 - 90 Gew.% Trennmittel sowie bis 60% Elastifiziermittel können als Kaschiermasse verwendet werden. Bevorzugt werden als Bindemittel Stärkederivate, z.B. anionische Kartoffelstärke, in Anteilen von 30 - 70 Gew.% eingesetzt. Als Trennmittel werden vorzugsweise Talkum, Ca-Stearat und/oder trennwirksame Copolymere mit Stearylgruppen in Anteilen von 30 - 80 Gew. % verwendet. Zur Elastifizierung haben sich Polypropylen- oder Polyethylenglykole vorzugsweise in Mengen zwischen 0 - 15 Gew.% als gut geeignet erwiesen. Dabei werden die höher molekularen, bei Raumtemperatur, festen Produkte vorrangig verwendet. Weitere in größeren Anteilen gut einsetzbare Elastifizierungsmittel sind Gummi Arabicum und Kunststoffe mit ähnlichem Eigenschaftsprofil. Die Kaschiermasse wird bevorzugt mit einem für wässrige Dispersionen geeigneten Auftragswerk auf einen Papierträger oder dergleichen beschichtet und in nassem Zustand mit einem zweiten Papierträger oder dergleichen eingedeckt und anschließend getrocknet. Bei Bedarf können die in der Papierherstellung üblichen Maßnahmen wie Rückbefeuchtung, Glättung und Egalisierung des erzeugten Verbunds eingesetzt werden.

Die Schichtstärke der Kaschiermasse liegt nach dem Trocknen vorzugsweise in einem Bereich von 3 -20 g/qm.

Die einzelnen Kaschiermassestreifen, die erfindungsgemäß nebeneinander angeordnet sind und zur Erzeugung der erwünschten Sollbruchstelle bereitgestellt werden sind jeweils vollflächig ausgebildet. Hierzu werden die Kaschiermassestreifen jeweils mittels Rasterwalzen, Siebdruck, Flexodruck auf einen der Träger aufgebracht und nass mit der zweiten Trägerbahn zusammen kaschiert und getrocknet. Die Beschichtungsaggregate müssen so gewählt werden, dass die beschichtete Kaschiermasse beim Kaschieren zu einem vollflächigen Film ausgebildet wird. Die vollflächige Beschichtung erfolg im Streifenstrich mittels Drahtrakel (Mayer-bar) oder Düsenbeschichtung. Bei Material, das im Siebdruck hergestellt wird, gibt das Siebdesign die Schichtstärken der Kaschiermassestreifen vor. Bevorzugt werden Siebe mit 14 bis 100 mesh und 7% - 60% Durchlass verwendet. Die Beschichtungsmenge an getrockneter Kaschiermasse wird im Bereich 2 - 20 g/qm eingestellt.

Für den Siebdruck werden höher viskose pastenartige, nicht schäumende wässrige Zubereitungen verwendet, deren Feststoffgehalt z.B. aus anionischer Kartoffelstärke besteht. Elastifizierende Zusätze wie Polypropylen- oder Polyethylenglykole und/ oder Trennmittel können in Mengen, die mit dem Hauptbestandteil verträglich sind, mit verwendet werden. Die Einstellung der Spaltkräfte, d.h. Anspaltkraft und Weiterspaltkraft, wird neben dem Anteil an Trennmittel durch Siebdesign und Feststoffkonzentration vorgegeben.

Zur Erzielung eines sauberen, nicht verschmierten Druckbildes muss der elastische Anteil im Fließverhalten der wässrigen Zubereitung gering gehalten werden, damit ein Fadenziehen vermieden wird. Dies kann z.B. durch Zusätze von Talkum oder geringen Mengen feinsteiligem Kieselgels oder anderen Verdickern erreicht werden.

Werden die Kaschiermassestreifen mittels Rasterwalze aufgetragen, so gibt die Gravur der Rasterwalze die Schichtstärke der Kaschiermassestreifen vor. Bevorzugt werden Rasterwalzen mit kreuzdiagonaler Gravur, insbesondere im 45° Winkel, verwendet, um einzelne Kaschiermassestreifen aufzutragen. Die Volumina der Gravuren liegen dabei bevorzugt im Bereich 25 - 60 cm³/m². Ebenso können Rasterwalzen mit Linienrasterungen mit 10 - 30 Linien/cm eingesetzt werden, deren Volumen bevorzugt im Bereich 30 - 90 cm³/m² liegt. Um diskrete Areale zu beschichten wird der Gleichlauf zwischen Papierträger und Rasterwalze bevorzugt.

Bei der Beschichtung mittels Rasterwalze werden fließfähige, nicht schäumende wässrige Zubereitungen verwendet, deren Feststoffgehalt z.B. aus anionischer Kartoffelstärke besteht. Elastifizierende Zusätze wie Polypropylen- oder Polyethylenglykole und/ oder Trennmittel können in Mengen, die mit dem Hauptbestandteil verträglich sind, mit verwendet werden. Die Einstellung der Spaltkräfte, d.h. Anspaltkraft und Weiterspaltkraft, wird neben dem Anteil an Trennmittel durch Gravur der Rasterwalze und Feststoffkonzentration vorgegeben.

Durch eine gezielte Mengeneinstellung der Kaschiermasse innerhalb der Kaschiermassestreifen können innerhalb dieser Streifen variierende Spaltkräfte eingestellt werden. Darüber hinaus können die vorgesehenen Kaschiermassestreifen unter einander unterschiedliche Spaltkräfte aufweisen. In einer Ausführungsform werden hierzu die Breiten der unterschiedlichen Kaschiermassestreifen unterschiedlich eingestellt. In einer bevorzugten Ausführungsform ist der in Anwendungsrichtung des Splicebandes hintere Kaschiermassestreifen breiter ausgebildet als der in Anwendungsrichtung vordere, d.h. erste Kaschiermassestreifen bzw. als die übrigen Kaschiermassestreifen des Splicebandes. Die Breite der einzelnen Kaschiermassestreifen liegt bevorzugt in einem Bereich von 5 bis 15 mm, noch bevorzugter in einem Bereich von 7 bis 10 mm.

Ebenfalls denkbar ist eine Ausführungsform, bei der die Spaltkräfte der Kaschiermassestreifen bei im Wesentlichen identischer Breite gezielt durch die Verwendung verschiedener Kaschiermassen eingestellt werden. Ferner ist eine Ausführungsart denkbar, in der sich die Schichtstärken zwischen den Kaschiermassestreifen unterscheiden, wodurch sich ebenfalls die Spaltkräfte auf unterschiedliche Werte einstellen lassen.

Die Kaschiermassestreifen sind derart zwischen dem ersten und zweiten Träger des Splicebandes angeordnet, dass sie selbst nicht miteinander in unmittelbarem Kontakt stehen. Das bedeutet, dass die Kaschiermassestreifen in einem bestimmten Abstand zueinander angeordnet sind. Der Abstand der Kaschiermassestreifen ergibt sich aus der Breite des Splicebandes und der Breite der einzelnen Kaschiermassestreifen. Bevorzugt sind die Kaschiermassestreifen so weit wie möglich von einander entfernt angeordnet. Dies bedingt den Effekt, dass das Zeitintervall zwischen dem Spalten der einzelnen Kaschiermassestreifen beim fliegenden Rollenwechsel so groß wie möglich wird. Bevorzugt handelt es sich bei den nebeneinander angeordneten Kaschiermassestreifen um zwei Kaschiermassestreifen, die zu einander in dem genannten Abstand angeordnet sind.

In einer bevorzugten Ausführungsform bedecken die Kaschiermassestreifen weniger als jeweils 80 % der Oberflächen des ersten und zweiten Trägers des Splicebandes, die sie miteinander verbinden, bevorzugt weniger als 70 %, noch bevorzugter weniger als 60 %.

In einer Ausführungsform der Erfindung beträgt die zum Aufspalten des in Anwendungsrichtung vorderen, d.h. ersten Kaschiermassestreifens des Splicebandes benötigte Anspaltkraft, wenn die entstehenden Spalthälften unter einem Winkel von 90 ° zum Kaschierverbund, d.h. in einem Winkel von 90 ° zur Anwendungsrichtung des Splicebandes mit einer Geschwindigkeit von 300 mm/min getrennt werden, 75 cN pro Zentimeter Verklebungsbreite, bevorzugt 70 cN, weiter bevorzugt 65 cN, und die zum Aufspalten des in Anwendungsrichtung vorderen Kaschiermassestreifens benötigte Arbeit maximal 50 Nmm (gemessen bei 23°C und 50%rLf unter Verwendung eines Zwick Roell Z2.5 Messinstrumentes, wobei für die Messung ein 5 cm breiter Streifen eines Splicebandes, dessen zwei Kaschiermassestreifen eine Breite von jeweils 10 mm aufweisen, quer zur Messrichtung auf dem T-Block des Messinstrumentes verklebt und die obere Klebmasseschicht mit handelsüblichem 80 g/m² Kopierpapier bedeckt wurde, welches zur Messung in die Klemmbacke eingespannt wurde). Die zum Aufspalten der in Anwendungsrichtung hinteren Kaschiermassestreifen benötigte Anspaltkraft und Spaltarbeit können höher liegen als die in Bezug auf den vorderen Kaschiermassestreifen genannten Werte.

Die Kaschiermassestreifen können gerade Streifen darstellen oder einen z.B. wellenartigen Verlauf aufweisen. In einer bevorzugten Ausführungsform liegen die Kaschiermassestreifen in Form gerader Streifen vor.

Der aus der Kaschiermasse gebildete, in Anwendungsrichtung vordere Kaschiermassestreifen schließt in einer bevorzugten Ausführungsart nicht bündig mit den mit Haftklebmasse beschichteten Trägern ab. In Anwendungsrichtung, d.h. in Rotationsrichtung des mit dem Spliceband ausgerüsteten Ballens, ist dieser Spaltsstreifen eingerückt, d.h. etwas nach hinten versetzt. Dies bedingt den Effekt, dass im Augenblick des Splicens zunächst die Verbindung der laufenden Bahn des abrollenden Ballens mit der ersten Haftklebemasseschicht des auf den gewickelten Ballen applizierten erfindungsgemäßen Splicebandes hergestellt wird und anschließend etwas zeitverzögert das kohäsive Spalten der Kaschiermassestreifen einsetzt. Vorteilhafterweise beträgt der Versatz des vorderen Kaschiermassestreifens in Bezug auf die in Anwendungsrichtung vorderen Kanten der Träger des Splicebandes bis zu 20 mm, bevorzugt bis zu 15 mm, z.B. 1 bis 3 mm, besonders bevorzugt 2 mm.

Als Träger können beliebige Trägermaterialien, insbesondere Trägerpapiere bzw. Folien ausgewählt werden, wobei der erste und der zweite Träger erfindungsgemäß gleich oder verschieden sein können. In einer Ausführungsform wird der Träger, der in der Bereitstellung des erfindungsgemäßen Splicebandes mit den Kaschiermassestreifen beschichtet wird, so ausgewählt, dass eine Beschichtung der Kaschiermasse problemlos möglich ist. So wird in einer besonders bevorzugten Ausführungsform Papier als Trägermaterial verwendet, das so ausgewählt ist, dass die Kaschiermasse in das Papier eindringt, ohne dieses zu durchdringen. In einer besonders bevorzugten Ausführungsform sind der erste und/oder zweite Träger des Splicebandes Papierträger.

Die Grammatur der einzelnen Träger liegt bevorzugt in einem Bereich von 30 bis 80 g/qm. Die Dicke liegt bevorzugt in einem Bereich von bzw. 30 bis 100 µm. Grundsätzlich gilt, dass die Trägermaterialien so dünn wie möglich ausgesucht werden sollte. Je dünner ein Spliceklebeband ist, desto weniger stört das Klebeband den Maschinendurchlauf. Liegt die Dicke der einzelnen Träger oberhalb des genannten Bereiches, kann es je nach Prozess zu Problemen beim Durchlauf durch die Maschinen kommen. Liegt die Trägerdicke jedoch unterhalb des genannten Bereiches kann es in Abhängigkeit von der Bahnspannung zu ungewollten Abrissen kommen, wenn die Zugfestigkeit des Klebebandes niedriger als die Bahnspannungen in der Verarbeitungsmaschine ist.

Für die meisten Anwendungen in der Papierindustrie hat sich als Trägermaterial maschinenglattes Papier mit einer Stärke von 30µm bis 80µm, bevorzugt 40 bis 65µm, besonders bevorzugt 50µm als geeignet herausgestellt. Beim Splicen von dickeren Materialien, z.B. von Papieren größer 200g/m² oder von Pappen, z.B. für die Getränkekartonherstellung können auch dickere Trägermaterialien eingesetzt werden.

Falls bei sehr dünnen Trägern eine Nasskaschierung nicht möglich ist, können als Kaschiermassen für die Kaschiermassestreifen auch Schmelzkleber verwendet werden, vorzugsweise repulpierbare Materialien auf Basis Polyvenylpyrolydon und oder entsprechender Copolymere oder Hydroxidpropylzellulose, die mit polaren Wachsen, Harzen und Trennwachsen wie z. B. Stearinsäure und bei Bedarf mit vorzugsweise wasserlöslichen Weichmachern abgemischt sind. Nachdem eine der Trägerbahnen mit einem derartigen Schmelzkleber als Kaschiermasse streifenförmig beschichtet wurde, wird die zweite Bahn thermisch aufkaschiert. Der Schmelzkleber sollte möglichst hohe Erweichungsbereiche oberhalb 120°C haben, damit bei Kontakt mit heißen Trockenzylindern z. B. in der Papiermaschine möglichst keine Schmelzkleberpartikel auf diesen Flächen abgelagert werden. Da Schmelzkleber bei der Papierherstellung als potenzielle Störstoffe eingestuft sind, wird diese Variante der Kaschierung nicht bevorzugt eingesetzt.

Als Haftklebmasse für die erste Haftklebmasseschicht wird vorzugsweise eine hochtackige, bevorzugt repulpierbare Klebmasse eingesetzt. Hochtackig bedeutet in diesem Zusammenhang, dass die Haftklebmasse im Endprodukt einen Rolling-Ball-Tack von weniger als 40 mm aufweist. Zur Bestimmung dieses Wertes wird dabei die jeweilige Haftklebmasse auf einem Standardpolyesterträger (Stärke 23 µm) mit einer Haftklebmassenschichtstärke von 50 g/m2 aufgetragen. Ein etwa 10 cm langer Streifen des Klebebandes wird mit der klebenden Seite nach oben horizontal auf der Prüfebene befestigt. Eine Probenkugel aus Stahl (Durchmesser: 11 mm; Masse: 5,6 g) wird mit Aceton gereinigt und für 2 h im Raumklima (Temperatur: 23 °C +/- 1 °C; relative Luftfeuchtigkeit: 50 % +/- 1 %) konditioniert. Zur Messung wird die Stahlkugel durch Herabrollen von einer 65 mm hohen Rampe (Neigungswinkel: 21 °) im Schwerefeld der Erde beschleunigt. Von der Rampe wird die Stahlkugel unmittelbar auf die klebrige Oberfläche der Probe gelenkt. Der auf der Klebemasse bis zum Stillstand der Kugel zurückgelegte Weg, d.h. der Rolling-Ball-Tack, wird gemessen. Der jeweilige Messwert ergibt sich (als Längenangabe in mm) aus dem Mittelwert von fünf Einzelmessungen.

Die Schichtstärke der ersten Haftklebmasseschicht beträgt bevorzugt 30 - 60g/m².

Besonders vorteilhaft im Sinne der vorliegenden Erfindung wird als Klebmasse für die erste Haftklebmassenschicht eine Klebmasse verwendet, umfassend 25-45 Gew.-% eines Copolymer (a) sowie 55-75 Gew.-% eines Weichmachers (b), wobei das Copolymer (a) erhältlich ist durch Copolymerisation eines Gemisches umfassend 30-70 Gew.-% Acrylsäure, 15-35 Gew.-% Butylacrylat und 15-35 Gew.-% Ethylhexylacrylat, und wobei als Weichmacher (b) ein ethoxyliertes C16 bis C18 - Alkylamin verwendet wird, das vorzugsweise 15 bis 25 Ethoxy-Einheiten im Alkylrest aufweist, beispielsweise Ethomeen C/25® der Firma Akzo Nobel.

Für die zweite Haftklebmassenschicht wird vorzugsweise eine scherfeste Haftklebmasse eingesetzt, die bevorzugt ebenfalls repulpierbar ist. Unter scherfester Haftklebmasse im Sinne der vorliegenden Erfindung wird eine Haftklebmasse verstanden, die eine statische Scherfestigkeit von mehr als 400 Minuten auf Streichrohpapier und mehr als 1000 Minuten auf Tiefdruckpapier bei 23°C und 55% rel. Luftfeuchte aufweist.
Zur Messung dieser Werte werden die zu untersuchenden Klebmassen auf einen Standardträger (Polyesterfolie Dicke: 25µm) mit einem Masseauftrag von 25g/m² aufgebracht. Nach dem Trocknen und optionalem Vernetzen der Klebmasse wird ein Streifen von 13 mm Breite und mindestens 20 mm Länge herausgeschnitten und auf ein definiertes Papier (z.B. Tiefdruckpapier Neopress T 54, 54g/m², oder Streichrohpapier Mediaprint, 135g/m², der Firma Stora Enso) verklebt. Die Verklebungsfläche beträgt 13mm x 20mm. Um einen konstanten Andruck beim Verkleben zu gewährleisten, wird der Prüfling mit einer 2 kg Rolle 2 mal langsam überrollt. Das so hergestellte Prüfmuster wird bei 23°C und 55% rel. Luftfeuchte mit einem Gewicht von 1 kg parallel zur Verklebungsebene belastet und es wird die Zeit gemessen, die der Klebestreifen auf dem Papier verbleibt.

In einer Ausführungsform der Erfindung wird als scherfeste Haftklebemasse, für die zweite Haftklebemasseschicht des Splicebandes eine Acrylatselbstklebemasse eingesetzt, umfassend 25-45 Gew.-% eines Copolymers (a') sowie 55-75 Gew.-% eines Weichmachers (b'), wobei als Weichmacher (b') ein ethoxyliertes C16 bis C18 - Alkylamin verwendet wird, das vorzugsweise 15 bis 25 Ethoxy-Einheiten im Alkylrest aufweist, beispielsweise Ethomeen C/25® der Firma Akzo Nobel. Das Copolymer (a') ist erhältlich in einer radikalischen Polymerisationsreaktion in polaren Lösungsmitteln mit Ethanol als Regler, optional unter Einsatz eines Aluminiumchelats als Vernetzer (0,3 bis 1,2 Gew.-%, bezogen auf die Gesamtmenge), aus einem Monomerengemisch umfassend 40-90 Gew.-% Acrylsäure sowie bis zu 60 Gew.-% Butylacrylat und optional bis zu 30 Gew.-% Ethylhexylacrylat. Ein bevorzugtes Copolymer (a') ist erhältlich aus einem Monomerengemisch umfassend 40-90 Gew.-% Acrylsäure sowie 10-60 Gew.-% Butylacrylat. Ein ebenfalls bevorzugtes Copolymer (a') ist erhältlich aus einem Gemisch umfassend 40-90 Gew.-% Acrylsäure, 15-35 Gew.-% Butylacrylat sowie 15-35 Gew.-% Ethylhexylacrylat.

Die Schichtstärke der zweiten Haftklebmassenschicht beträgt bevorzugt 15 - 30g/m².

In einer bevorzugten Ausführungsform der Erfindung sind die erste und/oder zweite Haftklebemasseschicht vollflächig auf dem ersten bzw. zweiten Träger des Splicebandes angeordnet.

In einer weiteren Ausführungsform der Erfindung sind die Haftklebemasseschichten mit einem Trennpapier (Liner), d.h. mit trennendem Trägermaterial belegt, z. B. mit beidseitig trennendem Trägermaterial wie z. B. silikonisiertem Papier. In einer besonderen Ausführungsform der Erfindung wird ein beidseitig trennendes Trägermaterial verwendet. Hierbei ist es ausreichend, lediglich ein solches Trägermaterial, d.h. lediglich einen einzigen Liner einzuschießen und das derart belegte Spliceband zu Rollen zu wickeln.

Das Spliceband kann erfindungsgemäß in verschiedenen Ausführungsformen bereitgestellt werden. Die Breite des Splicebandes ist keinen besonderen Einschränkungen unterworfen, liegt jedoch bevorzugt in einem Bereich von 20 mm bis 100 mm, besonders bevorzugt in einem Bereich von 30 mm bis 80 mm, besonders bevorzugt von 38mm - 75mm. Diese Breite ist für die Verwendung für den fliegenden Rollenwechsel besonders geeignet. Bei sehr schnell laufenden Maschinen (Streichmaschinen Papierherstellung) oder schwierig zu verklebenden bahnförmigen Materialien, wie z.B. unpolaren Folien wie PE oder PP, werden breitere Splicebänder benötigt. Für langsamere Maschinen bzw. einfach zu verklebende Untergründe, wie es z.B. für die meisten Papiersorten zutrifft, können die Breiten des Splicebandes reduziert werden.

Im Folgenden wird die Erfindung anhand eines Ausführungsbeispiels näher beschrieben, ohne die Erfindung hierdurch einschränken zu wollen.

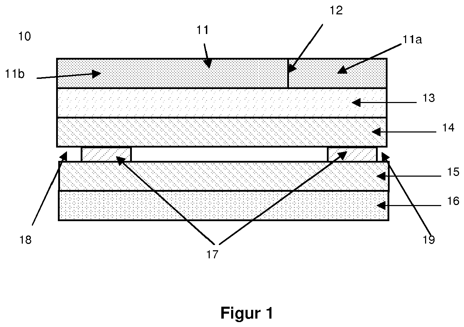

Figur 1 zeigt eine seitliche, schematische Ansicht eines Splicebandes, das erfindungsgemäß verwendet wird.

Im einzelnen zeigt Figur 1 ein Spliceband (10) mit zwei Trägern (14, 15), die mittels zweier Kaschiermassestreifen (17) zusammenkaschiert sind. Auf der Oberseite des ersten Trägers 14 ist eine erste Haftklebemasseschicht aufgebracht (13). Da diese in der späteren Anwendung den Kontakt zwischen ablaufender Bahn des abrollenden Ballens und neuer Materialbahn des gewickelten Ballens herstellt, ist diese Klebmasse vorteilhafterweise hochtackig eingestellt. Auf der Unterseite des zweiten Trägers ist eine zweite Haftklebemasseschicht (16) auf den Papierträger (15) aufgebracht. Die hierfür verwendete Haftklebmasse weist eine hohe Scherfestigkeit auf.
Die Klebmasseschicht 13 ist abgedeckt mit einem Trennmedium (11). Im vorliegenden Ausführungsbeispiel weist das Trennmedium 11 einen Schlitz (12) auf, sodass, durch separates Abziehen der beiden Trennmedien (11a, 11b) zwei definierte Bereiche auf der Klebmasse 13 entstehen. In der Anwendung kann zunächst der kleinere Bereich (11a) abgezogen werden, und auf dem darunter freiliegenden Teilbereich der Klebmasseschicht 13 wird der Endbereich der obersten Lage des gewickelten Ballens verklebt. Nach Verkleben der zweiten Haftklebemasseschicht (16) auf den Übergang von oberster zu zweitoberster Lage des Ballens, d.h. im Übergangsbereich von oberster zu zweitoberster Lage des Ballens, wird dann der größere Bereich (11b) abgezogen, sodass die größere Fläche der Haftklebemasseschicht 13 für den fliegenden Rollenwechsel zur Verfügung steht.

Die Kaschiermassestreifen (17) sind von den Kanten zur Mitte des Splicebandes hin versetzt (18, 19). Der in Anwendungsrichtung vordere Versatz ist notwendig, um den Anklebezeitpunkt der neuen Bahn von dem zeitlichen Beginn des Spaltvorganges des ersten Kaschiermassestreifens zu trennen. Das Maß des Versatzes ist abhängig von der Anwendungsgeschwindigkeit und den zu splicenden Materialien. Für einen Einsatz bei hohen Geschwindigkeiten (bis 1800m/min) beträgt der Versatz vorzugsweise 1 mm bis 3 mm, bevorzugt 2mm. Für den fliegenden Rollenwechsel an Kalandern und Umrollern bei Geschwindigkeiten von 50m/min - 100m/min) kann ein Versatz von beispielsweise bis zu 15mm gewählt werden. Der hintere Versatz (19) sollte grundsätzlich so klein wie möglich gewählt werden, da der hintere Kaschiermassestreifen auch dazu dient, eine sichere und spielfreie Verklebung des Splicebandes mit der obersten Lage des gewickelten Ballens zu gewährleisten. Je dichter der Streifen am Ende des Klebebandes positioniert werden kann, desto sicherer kann die Verklebung gestaltet werden. Allerdings sollte der Streifen nicht unter den Trägern 14, 15 hervorstehen, sodass sich der Versatz 19 ggf. aus der Beschichtungs - und Kaschiergenauigkeit der Herstellanlagen ergibt.

Erfindungsgemäß kann ein Spliceband bereitgestellt werden, das trotz eines nicht vollflächigen Spaltsystems in Form mindestens zweier Kaschiermassestreifen eine höhere Anspaltkraft aufweist, z.B. durch höheren Masseauftrag der Kaschiermasse, sodass höhere Geschwindigkeiten beim Splicen möglich sind, weil das höher spaltende System größeren Fliehkräften und aerodynamischen Kräften widerstehen kann. Des Weiteren bietet das erfindungsgemäß verwendete Spliceband den Vorteil, dass es breitenunabhängig ist, da die benötigte Arbeit zum Aufspalten des Splicebandes (Spaltarbeit) durch die Breite der Streifen und nicht durch die Breite des Spliceklebebandes selbst definiert wird. Überraschend wurde gefunden, dass der Einsatz erfindungsgemäß verwendeter Splicebänder in Druckmaschinen im Vergleich zu herkömmlichen Splicebändern die Erzielung eines verbesserten Druckbildes erlaubt.

## Patentansprüche

1. Verwendung eines Splicebandes (10) zum Ausrüsten eines gewickelten Ballens für den fliegenden Rollenwechsel, wobei
(a) das Spliceband (10) einen ersten und einen zweiten Träger (14, 15) umfasst sowie mindestens zwei dazwischen angeordnete Kaschiermassestreifen (17), die jeweils den ersten Träger (14) mit dem zweiten Träger (15) verbinden, wobei die Träger (14, 15) auf ihrer den Kaschiermassestreifen (17) abgewandten Seite eine erste beziehungsweise zweite Haftklebemasseschicht (13, 16) aufweisen, wobei die Kaschiermassestreifen (17) derart nebeneinander angeordnet sind, dass sie selbst nicht miteinander in unmittelbarem Kontakt stehen und jeweils eine Sollbruchstelle bilden;
wobei die einzelnen Kaschiermassestreifen (17) vollflächig, also jeweils in Form einer flächig dichten Auftragung, im Streifenstrich mittels Drahtrakel oder Düsenbeschichtung ausgebildet sind,
und wobei als Kaschiermasse eine solche verwendet wird, die neben modifizierter Stärke als Binder Talkum, Stearylderivate oder Dispersionen polymerer Trennmittel als schwach trennwirksame silikonfreie Zusätze enthält,
(b) das Spliceband (10) derart auf dem Ballen verklebt wird, dass ein Teil der ersten Haftklebemasseschicht (13) eine erste Verklebungsfläche mit dem Endbereich der obersten Lage des gewickelten Ballens bildet und die zweite Haftklebemasseschicht (16) im Übergangsbereich von oberster zu zweitoberster Lage des Ballens eine zweite Verklebungsfläche mit dem Ballen bildet, die zum Teil unterhalb der ersten Verklebungsfläche liegt,
wobei sich die erste Verklebungsfläche innerhalb der beiden Längskanten in Längsrichtung des Splicebandes (10) erstreckt, und der Teil der ersten Haftklebemasseschicht (13), der keine Verklebungsfläche mit dem Endbereich der oberste Lage des gewickelten Ballens bildet, für die verklebende Ankopplung an eine schnell laufende Bahn eines anderen, abrollenden Ballens offenliegt.

2. Verwendung gemäß Anspruch 1, wobei das Spliceband (10) zwei zwischen dem ersten und dem zweiten Träger angeordnete Kaschiermassestreifen (17) aufweist.

3. Verwendung gemäß Anspruch 1 oder 2, wobei der erste und/oder zweite Träger (14, 15) des Splicebandes (10) ein Papierträger ist.

4. Verwendung gemäß einem der Ansprüche 1 bis 3, wobei die Kaschiermassestreifen (17) in Form gerader Streifen vorliegen.

5. Verwendung gemäß einem der vorhergehenden Ansprüche, wobei die erste und/oder zweite Haftklebemasseschicht (13, 16) vollflächig auf dem ersten bzw. zweiten Träger (14, 15) angeordnet ist.

6. Verwendung gemäß einem der vorhergehenden Ansprüche, wobei die Kaschiermassestreifen (17) weniger als jeweils 80 % der Oberflächen des ersten und zweiten Trägers (14, 15) bedecken.

7. Spliceband wie in einem der Ansprüche 1 bis 6 verwendet, zum Ausrüsten eines gewickelten Ballens für den fliegenden Rollenwechsel, umfassend einen ersten und einen zweiten Träger (14, 15), mindestens zwei dazwischen angeordnete Kaschiermassestreifen (17), die jeweils den ersten Träger (14) mit dem zweiten Träger (15) verbinden, wobei die Träger (14, 15) auf ihrer den Kaschiermassestreifen abgewandten Seite eine erste bzw. zweite Haftklebemasseschicht (13, 16) aufweisen, **dadurch gekennzeichnet dass** die Kaschiermassestreifen (17) derart nebeneinander angeordnet sind, dass sie selbst nicht miteinander in unmittelbarem Kontakt stehen und jeweils eine Sollbruchstelle bilden,
wobei die einzelnen Kaschiermassestreifen (17) vollflächig, also jeweils in Form einer flächig dichten Auftragung, im Streifenstrich mittels Drahtrakel oder Düsenbeschichtung ausgebildet sind,
und wobei als Kaschiermasse eine solche verwendet wird, die neben modifizierter Stärke als Binder Talkum, Stearylderivate oder Dispersionen polymerer Trennmittel als schwach trennwirksame silikonfreie Zusätze enthält.

8. Spliceverfahren umfassend die Verwendung eines Splicebandes nach Anspruch 7, bei dem das Spliceband (10) derart auf einem gewickelten Ballen verklebt wird, dass ein Teil der ersten Haftklebemasseschicht (13) eine erste Verklebungsfläche mit dem Endbereich der obersten Lage des gewickelten Ballens bildet und die zweite Haftklebemasseschicht (16) im Übergangsbereich von oberster zu zweitoberster Schicht des Ballens eine zweite Verklebungsfläche mit dem Ballen bildet, die zum Teil unterhalb der ersten Verklebungsfläche liegt,
wobei sich die erste Verklebungsfläche innerhalb der beiden Längskanten in Längsrichtung des Splicebandes (10) erstreckt, und der Teil der ersten Haftklebemasseschicht (13), der keine Verklebungsfläche mit dem Endbereich der oberste Lage des gewickelten Ballens bildet, für die verklebende Ankopplung an eine schnell laufende Bahn eines anderen, abrollenden Ballens offenliegt,
wobei die so ausgerüstete Papierrolle auf die gleiche Drehgeschwindigkeit wie der abrollende Ballen beschleunigt und gegen die Bahn des abrollenden Ballens gedrückt wird, wobei der offenliegende Teil der ersten Haftklebemasseschicht (13) mit der Bahn des abrollenden Ballens verklebt, während nahezu zugleich das Spliceband (10) spaltet.

9. Gewickelter Ballen umfassend das Spliceband nach Anspruch 7.

## Claims

1. Use of a splicing tape (10) to equip a wound roll for flying splice, where
(a) the splicing tape (10) comprises a first carrier and a second carrier (14, 15) and also at least two strips of laminating composition (17) disposed between them, each strip joining the first carrier (14) to the second carrier (15), the carriers (14, 15) having, on their side remote from the strips of laminating composition (17), a first and a second layer of pressure-sensitive adhesive (13, 16), the strips of laminating composition (17) being disposed adjacently in such a way that they are not themselves in direct contact with one another and in each case form a predetermined breakage point;
where the individual strips of laminating composition (17) are formed over the full area, i.e. each in the form of a planarly coherent application, in the strip coating using Mayer bar or nozzle coating,
and where the laminating composition used is one which as well as modified starch as binder comprises talc, stearyl derivatives or dispersions of polymeric release agents as low-release, silicone-free additives,
(b) the splicing tape (10) is adhered to the roll in such a way that part of the first layer of pressure-sensitive adhesive (13) forms a first bonding area with the end region of the uppermost ply of the wound roll, and the second layer of pressure-sensitive adhesive (16), in the transition region from uppermost to second-uppermost ply of the roll, forms a second bonding area to the roll, which is-located partly below the first bonding area,
where the first bonding area extends within the two longitudinal edges in the longitudinal direction of the splicing tape (10), and the part of the first layer of pressure-sensitive adhesive (13) that does not form a bonding area with the end region of the uppermost ply
of the wound roll is exposed for adhesive coupling to a fast-running web of another, unwinding roll.

2. Use according to Claim 1, where the splicing tape (10) has two strips of laminating composition (17) disposed between the first carrier and the second carrier.

3. Use according to Claim 1 or 2, where the first and/or second carrier (14, 15) of the splicing tape (10) is a paper carrier.

4. Use according to any of Claims 1 to 3, where the strips of laminating composition (17) are in the form of linear strips.

5. Use according to any of the preceding claims, where the first and/or second layer of pressure-sensitive adhesive (13, 16) is disposed over the full area of the first or second carrier (14, 15).

6. Use according to any of the preceding claims, where the strips of laminating composition (17) cover less than in each case 80% of the surfaces of the first and second carriers (14, 15).

7. Splicing tape as used in any of Claims 1 to 6, to equip a wound roll for flying splice, comprising a first carrier and a second carrier (14, 15), at least two strips of laminating composition (17) disposed between them, each strip joining the first carrier (14) to the second carrier (15), the carriers (14, 15) having, on their side remote from the strips of laminating composition, a first and a second layer of pressure-sensitive adhesive (13, 16), **characterized in that** the strips of laminating composition (17) are disposed adjacently in such a way that they are not themselves in direct contact with one another and in each case form a predetermined breakage point,
where the individual strips of laminating composition (17) are formed over the full area, i.e. each in the form of a planarly coherent application, in the strip coating using Mayer bar or nozzle coating,
and where the laminating composition used is one which as well as modified starch as binder comprises talc, stearyl derivatives or dispersions of polymeric release agents as low-release, silicone-free additives.

8. Splicing method comprising the use of a splicing tape according to Claim 7, wherein the splicing tape (10) is adhered to a wound roll in such a way that part of the first layer of pressure-sensitive adhesive (13) forms a first bonding area with the end region of the uppermost ply of the wound roll, and the second layer of pressure-sensitive adhesive (16), in the transition region from uppermost to second-uppermost layer of the roll, forms a second bonding area to the roll, which is located partly below the first bonding area,
where the first bonding area extends within the two longitudinal edges in the longitudinal direction of the splicing tape (10), and the part of the first layer of pressure-sensitive adhesive (13) that does not form a bonding area with the end region of the uppermost ply of the wound roll is exposed for adhesive coupling to a fast-running web of another, unwinding roll,
where the roll of paper thus equipped is accelerated to the same rotational speed as the unwinding roll and is pressed against the web of the unwinding roll, the exposed part of the first layer of pressure-sensitive adhesive (13) bonding to the web of the unwinding roll, while at almost the same time the splicing tape (10) splits.

9. Wound roll comprising the splicing tape according to Claim 7.

## Revendications

1. Utilisation d'une bande d'épissage (10) pour l'équipement d'une balle enroulée pour le changement de bobine automatique, dans laquelle
(a) la bande d'épissage (10) comprend un premier et un second support (14, 15) et au moins deux bandes de masse de doublage intercalées (17), qui relient à chaque fois le premier support (14) au second support (15), les supports (14, 15) présentant sur leur côté opposé aux bandes de masse de doublage (17) une première et une seconde couche de masse adhésive de contact (13, 16), les bandes de masse de doublage (17) étant disposées les unes à côté des autres, de telle sorte qu'elles ne soient pas en contact direct les unes avec les autres et forment à chaque fois un point de rupture théorique ;
les bandes de masse de doublage (17) individuelles étant formées sur toute la surface, c'est-à-dire à chaque fois sous la forme d'une application dense de grande étendue, en bande au moyen d'une racle ou d'un revêtement par des buses,
et une masse de doublage qui contient outre de l'amidon modifié en tant que liant du talc, des dérivés de stéaryle ou des dispersions d'agents de séparation polymères en tant qu'additifs sans silicone à léger effet de séparation étant utilisée,
(b) la bande d'épissage (10) est collée sur la balle de telle sorte qu'une partie de la première couche de masse adhésive de contact (13) forme une première surface de collage avec la zone d'extrémité de la couche supérieure de la balle enroulée et la seconde couche de masse adhésive de contact (16) forme avec la balle, dans la zone de transition de la couche supérieure à la seconde couche de la balle, une seconde surface de collage qui se situe en partie en dessous de la première surface de collage,
la première surface de collage s'étendant à l'intérieur des deux arêtes longitudinales dans la direction longitudinale de la bande d'épissage (10), et la partie de la première couche de masse adhésive de contact (13), qui ne forme pas une surface de collage avec la zone d'extrémité de la couche supérieure de la balle enroulée, étant dénudée pour l'accouplement adhésif à une bande passant rapidement d'une autre balle défilante.

2. Utilisation selon la revendication 1, dans laquelle la bande d'épissage (10) comprend deux bandes de masse de doublage (17) agencées entre le premier et le second support.

3. Utilisation selon la revendication 1 ou 2, dans laquelle le premier et/ou second support (14, 15) de la bande d'épissage (10) sont un support en papier.

4. Utilisation selon l'une quelconque des revendications 1 à 3, dans laquelle les bandes de masse de doublage (17) se présentent sous la forme de bandes droites.

5. Utilisation selon l'une quelconque des revendications précédentes, dans laquelle la première et/ou la seconde couche de masse adhésive de contact (13, 16) sont agencées sur toute la surface sur le premier ou le second support (14, 15).

6. Utilisation selon l'une quelconque des revendications précédentes, dans laquelle les bandes de masse de doublage (17) recouvrent chacune moins de 80 % des surfaces du premier et du second support (14, 15).

7. Bande d'épissage telle qu'utilisée dans l'une quelconque des revendications 1 à 6, pour l'équipement d'une balle enroulée pour le changement de bobine automatique, comprenant un premier et un second support (14, 15), au moins deux bandes de masse de doublage intercalées (17), qui relient à chaque fois le premier support (14) au second support (15), les supports (14, 15) présentant sur leur côté opposé aux bandes de masse de doublage une première et une seconde couche de masse adhésive de contact (13, 16), **caractérisée en ce que** les bandes de masse de doublage (17) sont disposées les unes à côté des autres, de telle sorte qu'elles ne soient pas en contact direct les unes avec les autres et forment à chaque fois un point de rupture théorique ;
les bandes de masse de doublage (17) individuelles étant configurées sur toute la surface, c'est-à-dire à chaque fois sous la forme d'une application dense de grande étendue, en bande au moyen d'une racle ou d'un revêtement par des buses,
et une masse de doublage qui contient outre de l'amidon modifié en tant que liant du talc, des dérivés de stéaryle ou des dispersions d'agents de séparation polymères en tant qu'additifs sans silicone à léger effet de séparation étant utilisée.

8. Procédé d'épissage comprenant l'utilisation d'une bande d'épissage selon la revendication 7, selon lequel la bande d'épissage (10) est collée sur une balle enroulée de sorte qu'une partie de la première couche de masse adhésive de contact (13) forme une première surface de collage avec la zone d'extrémité de la couche supérieure de la balle enroulée et la seconde couche de masse adhésive de contact (16) forme avec la balle, dans la zone de transition de la couche supérieure à la seconde couche de la balle, une seconde surface de collage qui se situe en partie au-dessous de la première surface de collage,
la première surface de collage s'étendant à l'intérieur des deux arêtes longitudinales dans la direction longitudinale de la bande d'épissage (10), et la partie de la première couche de masse adhésive de contact (13), qui ne forme pas une surface de collage avec la zone d'extrémité de la couche supérieure de la balle enroulée, étant dénudée pour l'accouplement adhésif à une bande passant rapidement d'une autre balle défilante,
la bobine de papier ainsi équipée accélérant à la même vitesse de rotation que la balle défilante et étant poussée contre la bande de la balle défilante, la partie dénudée de la première couche de masse adhésive de contact (13) étant collée avec la bande de la balle défilante, pendant que la bande d'épissage (10) se divise pratiquement simultanément.

9. Balle enroulée comprenant la bande d'épissage selon la revendication 7.
